# FASCICULE DE BREVET EUROPEEN

(11) **EP 2 408 793 B1**
(45) Date de publication et mention de la délivrance du brevet: **23.07.2014**
(21) Numéro de dépôt: 10712460.4
(22) Date de dépôt: 16.03.2010
(51) Int. Cl.: C07F 17/02, C01B 33/00

(54) **PROCEDE DE FONCTIONNALISATION DE SURFACE PAR DES ALCYNES DISUBSTITUES**
VERFAHREN ZUR OBERFLÄCHENFUNKTIONALISIERUNG DURCH DISUBSTITUIERTE ALKINE
METHOD FOR SURFACE FUNCTIONALISATION BY DISUBSTITUTED ALKYNES

(30) Priorité: 18.03.2009 FR 0901255
(43) Date de publication de la demande: 25.01.2012
(73) Titulaire: Commissariat à l'Énergie Atomique et aux Énergies Alternatives, 75015 Paris (FR)
(72) Inventeur: DELAPIERRE, Guillaume, F-38450 Vif (FR); BARATTIN, Régis, F-38000 Grenoble (FR); BERNARDIN, Aude, F-45740 Lailly-en-Val (FR); TEXIER-NOGUES, Isabelle, F-38000 Grenoble (FR)
(74) Mandataire: Noel, Chantal Odile
(86) Numéro de dépôt international: PCT/FR2010/000222
(87) Numéro de publication internationale: WO 2010/106246

(56) Documents cités:
- WO-A1-2007/024055

## Description

L'invention se rapporte à l'utilisation d'alcynes disubstitués pour la fonctionnalisation de la surface d'un substrat en un matériau semi-conducteur, avec des molécules d'intérêt, ainsi qu'à un procédé de fonctionnalisation de la surface d'un substrat en un matériau semi-conducteur avec des molécules d'intérêt.

La fonctionnalisation de la surface d'un support en un matériau semi-conducteur, en particulier en silicium ou en germanium ou en leurs alliages tels que SiC, SiGe, etc... est l'objet de nombreuses recherches, en particulier dans le domaine des composants électroniques miniaturisés ainsi que dans le domaine de la biologie moléculaire.

Dans le domaine de la biologie moléculaire ou des biotechnologies, la fonctionnalisation de la surface du substrat en un matériau semi-conducteur est effectuée avec des molécules biologiques telles que les molécules d'ADN, des peptides, des protéines, etc..., pour des applications dans le domaine de la recherche médicale, du diagnostic médical, du suivi de l'environnement, de la sécurité civile ou militaire, etc...

Dans le domaine de l'électronique moléculaire, la fonctionnalisation d'un substrat en un matériau semi-conducteur par des molécules redox est en particulier utilisée pour les applications de mémoires.

Dans ce cas, les différents états redox disponibles des molécules redox sont utilisés pour stocker des informations sur la surface, en faisant varier la tension appliquée au système : en appliquant une tension correspondant au potentiel d'oxydation des molécules greffées, la surface devient chargée : on procède ainsi à l'écriture des données ; en revenant à l'état initial (réduction), la surface redevient neutre : cela correspond à l'effacement des données.

Une méthode de fonctionnalisation de la surface d'un substrat inorganique a été décrit dans WO 2007/024055 A1.

Différentes méthodes de fonctionnalisation de la surface d'un substrat en germanium ou en silicium ont été proposées, en particulier dans JM Buriak, Chem Rev, 2002, 1271-1308.

Les réactions les plus couramment utilisées sont :
- la réaction d'alcènes et d'alcynes terminaux mono-fonctionnalisés par activation thermique ou photochimique. A ce jour, seuls ont été envisagées les réactions d'alcènes mono- ou disubstitués et d'alcynes monosubstitués.

Ainsi, R. Terborg et al, Phys. Rev. B, 2000, 16697-16703 et Morikawa et al, Phys rev B, 2001, 63, 33405 ont effectué des études théoriques sur l'absorption de l'acétylène sur des surfaces de silicium.
- la réaction de sels de diazonium ou d'anions métalliques de formule RMgX ou RLi par activation électrique. Cette réaction a été décrite en particulier par J.Tour et al, JACS, 2004, 370-378.

Ainsi, plusieurs méthodes de fonctionnalisation de surfaces permettent aujourd'hui de greffer des molécules organiques sur des surfaces de silicium ou de germanium non oxydés.

Cependant, ces réactions ont besoin d'être activées pour se dérouler. Les activations peuvent être des activations thermique, photochimique, catalytique ou électrique.

L'invention a pour but de permettre de fonctionnaliser la surface d'un substrat en silicium ou en germanium en utilisant moins d'énergie d'activation qu'avec les alcènes mono- ou disubstitués et qu'avec les alcynes monosubstitués utilisés dans l'art antérieur ainsi ou par la réaction des sels de diazonium ou d'anions métalliques.

A cet effet, l'invention propose l'utilisation d'un composé de formule I suivante :

A-(E1)ₙ₁-F1 Formule I

dans laquelle :
- A est choisi parmi :
   1) un alcyne de formule : 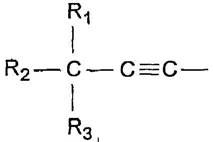 dans laquelle :
      - R₁, R₂ et R₃ sont identiques ou différents et sont indépendamment l'un de l'autre choisis dans le groupe formé par un atome d'hydrogène ; un atome d'halogène ; un groupe -OH ; un groupe -NH₂ ; un groupe -SH et une chaîne alkyle en C₁ à C₃₀, linéaire ou ramifiée, saturée, comprenant éventuellement des hétéroatomes et/ou des groupements aryles et/ou des groupements amines et/ou des groupements esters et/ou des groupements oxyamines et/ou des groupements oximes et/ou des groupements amides, et/ou éventuellement substituée par des atomes d'halogène ; et
   2) un cycloalcyne ou un hétérocycloalcyne à 8 à 12 chaînons, éventuellement substitués par un groupement R₁ tel que défini ci-dessus,
- E1 est une chaîne alkyle en C₁ à C₃₀, linéaire ou ramifiée, saturée ou insaturée, comprenant éventuellement des hétéroatomes et/ou des groupements aryle et/ou des groupements amines et/ou des groupements esters et/ou des groupements oxyamines et/ou des groupements oximes et/ou des groupements amides, et/ou éventuellement substitués par des atomes d'halogène,
- n1 = 0 ou 1, et
- F1 est un groupe réactif apte à réagir avec un groupe réactif F2 d'une molécule d'intérêt de formule II suivante :

   F2-(E2)ₙ₂-X Formule II

   dans laquelle :
- F2 est un groupe réactif apte à réagir avec le groupe réactif F1 du composé de formule I,
- E2 est une chaîne alkyle en C₁ à C₃₀, linéaire ou ramifiée, saturée ou insaturée, comprenant éventuellement des hétéroatomes et/ou des groupements aryle et/ou des groupements amines et/ou des groupements esters et/ou des groupements oxyamines et/ou des groupements oximes et/ou des groupements amides, et/ou éventuellement substitués par des atomes d'halogène,
- n2 = 0 ou 1, et
- X est un groupement ayant des propriétés d'intérêts,
pour la fonctionnalisation de la surface d'un substrat en un matériau semi-conducteur avec des molécules d'intérêt.

De préférence, le matériau semi-conducteur du substrat est choisi parmi le silicium, le germanium, et les alliages et mélanges de ceux-ci.

Le plus préférablement, dans la formule I, E1 est une chaîne alkyle en C₁ à C₅, linéaire ou ramifiée, saturée, pouvant comprendre au moins un hétéroatome.

De préférence, dans A, R₁ et R₂ et R₃, lorsque présents, sont identiques ou différents et sont indépendamment l'un de l'autre choisis dans le groupe formé par un atome d'hydrogène ; un atome d'halogène et une chaîne alkyle en C₁ à C₃₀, linéaire ou ramifiée, saturée, comprenant éventuellement des hétéroatomes et/ou des groupements aryles et/ou des groupements amines, et/ou éventuellement substituée par des atomes d'halogène.

Plus préférentiellement, dans A, R₁ est une chaîne alkyle en C₁ à C₅, linéaire ou ramifiée, pouvant comprendre au moins un hétéroatome, et R₂ et R₃, lorsque présents, sont H.

Dans un premier mode de mise en oeuvre préféré de l'utilisation de l'invention, la formule I, A est un cyclooctyne non substitué.

Toujours de préférence, F1 et F2 sont choisis parmi un groupe carboxyle, une entité radicalaire, un groupe hydroxyle, un groupe alcool, un groupe amine, un groupe ester, un groupe aldéhyde, un groupe hydrazide, un groupe cétone, un groupe époxy, un groupe isocyanate, un groupe maléimide, un groupe thiol, et un groupe oxyamine.

Dans un mode de mise oeuvre préféré de l'utilisation de l'invention, dans le composé de formule I :
- dans A, R₁ et R₂ et R₃, lorsque présents, sont H,
- n1 vaut 0,
- F1 est un radical -COOH, et
- F2 est un radical -NH₂.

Dans un autre mode de mise oeuvre préféré de l'utilisation de l'invention, dans la formule I :
- dans A, R₁ et R₂ et R₃, lorsque présents, sont H,
- n2=1,
- E1 est une chaine -C₆H₁₂-,
- F1 est un radical -COOH, et
- F2 est un radical -NH₂.

Dans une variante préférée de l'utilisation de l'invention, dans la formule I :
- A est un cyclooctyne non substitué,
- n1=1,
- E1 est une chaine -O-CH₂-,
- F1 est un radical -COOH, et
- F2 est un radical -NH₂.

De préférence, dans tous les modes de mise oeuvre et variantes de l'utilisation de l'invention, dans la formule II, E2 est une chaine -(CH₂)₂-O-CH₂-.

Egalement, dans tous les modes de mise oeuvre et variantes de l'utilisation de l'invention, dans la formule II, X est choisi dans le groupe constitué d'une molécule de porphyrine, une molécule d'anthracène, une molécule de naphtalène, une molécule de fullerène, une molécule de polyoxométallate et un groupement férrocène. Le plus préférablement X est un groupement férrocène.

L'invention propose également un procédé de fonctionnalisation de la surface d'un substrat en un matériau semi-conducteur caractérisé en ce qu'il comprend les étapes suivantes :
a) réaction du groupe réactif F1 d'un composé de formule I de formule suivante :

   A-(E1)ₙ₁-F1 Formule I

   dans laquelle :
   - A est choisi parmi :
      1) un alcyne de formule : 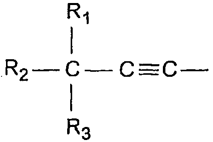 dans laquelle :
         - R₁, R₂ et R₃ sont identiques ou différents et sont indépendamment l'un de l'autre choisis dans le groupe formé par un atome d'hydrogène ; un atome d'halogène ; un groupe -OH ; un groupe -NH₂; un groupe -SH et une chaîne alkyle en C₁ à C₃₀, linéaire ou ramifiée, saturée, comprenant éventuellement des hétéroatomes et/ou des groupements aryles et/ou des groupements amines et/ou des groupements esters et/ou des groupements oxyamines et/ou des groupements oximes et/ou des groupements amides, et/ou éventuellement substituée par des atomes d'halogène ; et
      2) un cycloalcyne ou un hétérocycloalcyne à 8 à 12 chaînons, éventuellement substitués par un groupement R₁ tel que défini ci-dessus,
   - E1 est une chaîne alkyle en C₁ à C₃₀, linéaire ou ramifiée, saturée ou insaturée, comprenant éventuellement des hétéroatomes et/ou des groupements aryle et/ou des groupements amines et/ou des groupements esters et/ou des groupements oxyamines et/ou des groupements oximes et/ou des groupements amides, et/ou éventuellement substitués par des atomes d'halogène,
   - n1= 0 ou 1,
      avec un groupe réactif F2 d'une molécule d'intérêt de formule II suivante :

      F2-(E2)ₙ₂-X Formule II

      dans laquelle :
   - F2 est un groupe réactif apte à réagir avec le groupe réactif F1 du composé de formule I,
   - E2 est une chaîne alkyle en C₁ à C₃₀, linéaire ou ramifiée, saturée ou insaturée, comprenant éventuellement des hétéroatomes et/ou des groupements aryle et/ou des groupements amines et/ou des groupements esters et/ou des groupements oxyamines et/ou des groupements oximes et/ou des groupements amides, et/ou éventuellement substitués par des atomes d'halogène,
   - n2 = 0 ou 1, et
   - X est un groupement ayant des propriétés d'intérêts,
      pour la fonctionnalisation de la surface d'un substrat en un matériau semi-conducteur avec des molécules d'intérêt, et
b) réaction de la triple liaison du composé de formule I avec le matériau semi-conducteur.

Dans une première variante du procédé de l'invention, l'étape b) est effectuée avant l'étape a).

Dans ce cas, optionnellement, le procédé de l'invention comprend de plus :
- une étape a1) de protection du groupe réactif F1, avant la mise en oeuvre de l'étape a), et
- une étape b1) de déprotection du groupe réactif F1, avant la mise en oeuvre de l'étape b).

Dans une seconde variante du procédé de l'invention, l'étape a) est effectuée avant l'étape b).

Dans toutes les variantes du procédé de l'invention, de préférence le matériau semi-conducteur du substrat est choisi parmi le silicium, le germanium et leurs alliages et mélanges.

Le plus préférablement, dans la formule I, E1 est une chaîne alkyle en C₁ à C₅, linéaire ou ramifiée, saturée, pouvant comprendre au moins un hétéroatome.

De préférence, dans A, R₁ et R₂ et R₃, lorsque présents, sont identiques ou différents et sont indépendamment l'un de l'autre choisis dans le groupe formé par un atome d'hydrogène ; un atome d'halogène et une chaîne alkyle en C₁ à C₃₀, linéaire ou ramifiée, saturée, comprenant éventuellement des hétéroatomes et/ou des groupements aryles et/ou des groupements amines, et/ou éventuellement substituée par des atomes d'halogène.

Plus préférentiellement, dans A, R₁ est une chaîne alkyle en C₁ à C₅, linéaire ou ramifiée, pouvant comprendre au moins un hétéroatome, et R₂ et R₃, lorsque présents, sont H.

De préférence, dans le procédé de l'invention, dans la formule I, A est un cyclooctyne non substitué.

Toujours de préférence, dans le procédé de l'invention, F1 et F2 sont choisis dans le groupe constitué par un groupe carboxyle, une entité radicalaire, un groupe hydroxyle, un groupe alcool, un groupe amine, un groupe ester, un groupe aldéhyde, un groupe hydrazide, un groupe cétone, un groupe époxy, un groupe isocyanate, un groupe maléimide, et un groupe thiol.

Dans un premier mode de mise en oeuvre du procédé de l'invention, dans la formule I :
- dans A, R₁ et R₂ et R₃, lorsque présents, sont H,
- n1 vaut 0,
- F1 est un radical -COOH, et
- F2 est un radical -NH₂.

Dans un second mode de mise en oeuvre du procédé de l'invention, dans la formule I :
- dans A, R₁ et R₂ et R₃, lorsque présents, sont H,
- n1 = 1,
- E1 est une chaine -C₆H₁₂-,
- F1 est un radical -COOH, et
- F2 est un radical -NH₂.

Dans un troisième mode de mise en oeuvre du procédé de l'invention dans la formule I, A est un cyclooctyne non substitué,
- n1 = 1,
- E1 est une chaîne -O-CH₂-,
- F1 est un radical -COOH, et
- F2 est un radical -NH₂.

Dans toutes les variantes et modes de mise en oeuvre du procédé de l'invention, de préférence, dans la formule II, E2 est une chaine -(CH₂)₂-O-CH₂-.

Egalement de préférence, dans la formule II, X est choisi dans le groupe constitué d'une molécule de porphyrine, une molécule d'anthracène, une molécule de naphtalène, une molécule de fullerène, une molécule de polyoxométallate et un groupement férrocène. Le plus préférablement X est un groupement férrocène.

L'invention sera mieux comprise et d'autres caractéristiques et avantages de celle-ci apparaîtront plus clairement à la lecture de la description explicative qui suit.

L'invention est basée sur l'utilisation d'alcynes disubstitués qui ont une réactivité accrue avec les substrats en matériaux semi-conducteurs par rapport aux alcènes monosubstitués ou disubstitués ainsi que par rapport aux alcynes monosubstitués.

Dans l'invention, cette réactivité accrue des alcynes disubstitués est utilisée pour fonctionnaliser le substrat par réaction de la triple liaison de l'alcyne disubstitué tel que défini dans l'invention, avec des groupements réactifs présents sur le substrat lui-même.

Les alcynes disubstitués utilisés dans l'invention sont de plus stables, ce qui permet de fonctionnaliser les surfaces d'un substrat en un matériau semi-conducteur de façon durable dans le temps, ce qui n'est pas le cas par exemple avec les sels de diazonium qui sont très réactifs et tendent à se dégrader assez rapidement.

Dans l'invention, les termes suivants ont les significations suivantes :
- molécule d'intérêt ou groupe d'intérêt : toute molécule présentant une fonctionnalité utile dans des réactions sur support solide, par exemple des réactions de synthèse, ou de détection directe ou indirecte. Cette molécule d'intérêt peut être, par exemple, sans que cette liste soit limitative, une biomolécule, telle qu'une protéine (en particulier une enzyme), un acide aminé, un peptide, un anticorps, un antigène, modifiés ou non ; un glycopeptide, un lipide, un stéroïde, un glycolipide, un sucre, un polysaccharide, modifiés ou non ; une molécule d'ADN, d'ARN, un oligonucléotide modifiés ou non ; une molécule capable de générer, directement ou indirectement, un signal, ou bien une molécule complexe, multifonctionnelle; etc. Avantageusement, cette molécule d'intérêt constitue l'un des membres d'un couple d'affinité, il peut s'agir par exemple de la biotine, ou d'un peptide potentiellement antigénique, un haptène, etc...,
- alcyne disubstitué : composé de formule R-C≡C-R' dans laquelle R et R' sont différents de H. En contraste un alcyne monosubstitué est un composé de formule H-C≡C-R'. Le groupement R' peut être tout groupement, et en particulier le groupement réactif F1 tel que défini dans l'invention,
- molécule d'intérêt : molécule comportant un groupement ayant des propriétés particulières et que l'on veut « greffer » sur la surface d'un support en un matériau semi-conducteur,
- carbone alcynique : carbone lié à une triple liaison,
- cycloalcyne à "X" chaînons : cycle comprenant "X" liaisons carbone-carbone formant un cycle, l'une de ces liaison étant une liaison triple,
- hétérocycloalcyne, cycloalcyne tel que défini ci-dessus, dans lequel un ou plusieurs atomes de carbone sont remplacés par un hétéroatome tel que O, N ou S,
- alliage de silicium : matériau comprenant du silicium en alliage avec un autre composé tel que par exemple du carbure de silicium, etc...
- alliage de germanium : matériau comprenant du germanium en alliage avec un autre composé tel que par exemple du carbure de germanium (GeC),
- mélange de silicium et de germanium : matériau composé de silicium et de germanium, en toutes proportions,
- entité radicalaire : entité chimique possédant un ou plusieurs électrons non appariés.

L'alcyne disubstitué utilisé dans l'invention a la formule I suivante :

A-(E1)ₙ₁-F1 Formule I

dans laquelle :
- A est soit alcyne de formule : 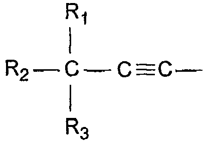 dans laquelle :
- R₁, R₂ et R₃ sont identiques ou différents et sont indépendamment l'un de l'autre choisis dans le groupe formé par un atome d'hydrogène ; un atome d'halogène ; un groupe -OH ; un groupe -NH₂; un groupe -SH et une chaîne alkyle en C₁ à C₃₀, linéaire ou ramifiée, saturée, comprenant éventuellement des hétéroatomes et/ou des groupements aryles et/ou des groupements amines et/ou des groupements esters et/ou des groupements oxyamines et/ou des groupements oximes et/ou des groupements amides, et/ou éventuellement substituée par des atomes d'halogène ;
- soit un cycloalcyne ou un hétérocycloalcyne à 8 à 12 chaînons, éventuellement substitués par un groupement R₁ tel que défini pour l'alcyne de formule : 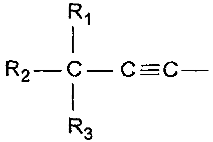
- E1 est une chaîne alkyle en C₁ à C₃₀, linéaire ou ramifiée, saturée ou insaturée, comprenant éventuellement des hétéroatomes et/ou des groupements aryle et/ou des groupements amines et/ou des groupements esters et/ou des groupements oxyamines et/ou des groupements oximes et/ou des groupements amides, et/ou éventuellement substitués par des atomes d'halogène,
- n1 = 0 ou 1, et
- F1 est un groupe réactif apte à réagir avec un groupe réactif F2 d'une molécule d'intérêt de formule II suivante :

   F2-(E2)ₙ₂-X Formule II

   dans laquelle :
- F2 est un groupe réactif apte à réagir avec le groupe réactif F1 du composé de formule I,
- E2 est une chaîne alkyle en C₁ à C₃₀, linéaire ou ramifiée, saturée ou insaturée, comprenant éventuellement des hétéroatomes et/ou des groupements aryle et/ou des groupements amines et/ou des groupements esters et/ou des groupements oxyamines et/ou des groupements oximes et/ou des groupements amides, et/ou éventuellement substitués par des atomes d'halogène,
- n2 = 0 ou 1, et
- X est un groupement ayant des propriétés d'intérêts,
pour la fonctionnalisation de la surface d'un substrat en un matériau semi-conducteur avec des molécules d'intérêt.

On voit donc que les groupements réactifs F1 et F2 sont choisis en fonction de l'un de l'autre.

Ils sont de préférence choisis dans le groupe constitué par un groupe carboxyle, une entité radicalaire, un groupe hydroxyle, un groupe alcool, un groupe amine, un groupe oxyamine, un groupe ester, un groupe aldéhyde, un groupe hydrazide, un groupe cétone, un groupe époxy, un groupe isocyanate, un groupe maléimide, et un groupe thiol.

Plus précisément :
- lorsque F1 est un groupe carboxyle, F2 est de préférence un groupe amine ou alcool,
- lorsque F1 est une entité radicalaire, F2 est de préférence une autre entité radicalaire,
- lorsque F1 est un groupe hydroxyle ou un groupe alcool, F2 est de préférence un groupe carboxyle ou isocyanate,
- lorsque F1 est un groupe amine, F2 est de préférence un groupe ester ou aldéhyde,
- lorsque F1 est un groupe ester, F2 est de préférence un groupe amine ou alcool,
- lorsque F1 est un groupe aldéhyde, F2 est de préférence un groupe hydrazide ou amine ou oxyamine,
- lorsque F1 est un groupe hydrazide, F2 est de préférence un groupe aldéhyde,
- lorsque F1 est un groupe cétone, F2 est de préférence un groupe alcool, plus préférablement F2 est un groupe comportant 2 groupes alcool pour une réaction avec F1 par acétylisation,
- lorsque F1 est un groupe époxy, F2 est de préférence un groupe amine ou alcool ou thiol,
- lorsque F1 est un groupe isocyanate, F2 est de préférence un groupe hydroxyle,
- lorsque F1 est un groupe maléimide, F2 est de préférence choisi parmi un groupe thiol, un groupe amine et un groupe diène,
- lorsque F1 est un groupe thiol, F2 est choisi parmi un groupe maléimide ou thiol ou époxyde, et
- lorsque F1 est un groupe oxyamine, F2 est choisi parmi un groupe aldéhyde ou cétone.

Quant à E1, de préférence il est une chaîne alkyle en C₁ à C₅, linéaire ou ramifiée, saturée, pouvant comprendre au moins un hétéroatome.

De préférence, R₁ et R₂ et R₃, lorsque R₂ et R₃ sont présents, c'est-à-dire sont identiques ou différents et sont indépendamment l'un de l'autre choisis dans le groupe formé par un atome d'hydrogène ; un atome d'halogène et une chaîne alkyle en C₁ à C₃₀, linéaire ou ramifiée, saturée, comprenant éventuellement des hétéroatomes et/ou des groupements aryles et/ou des groupements amines, et/ou éventuellement substituée par des atomes d'halogène.

Les termes "dans A, R₁ et R₂ et R₃, lorsque présents", englobent le cas dans lequel A est un alcyne linéaire substitué par R₁, R₂ et R₃ et le cas dans lequel A est un (hétéro)cycloalcyne uniquement substitué par R₁.

Plus préférentiellement, R₁ est une chaîne alkyle en C₁ à C₅, linéaire ou ramifiée, pouvant comprendre au moins un hétéroatome, et R₂ et R₃ sont H.

L'alcyne disubstitué utilisé dans l'invention et dans le procédé de fonctionnalisation de l'invention peut être un alcyne à chaine linéaire auquel cas il a la formule : 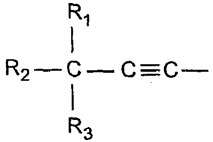 où R₁, R₂ et R₃ sont tels que définis ci-dessus.

Le plus préférablement, dans cette formule, R₁ est un alkyle en C₁ à C₅ linéaire ou ramifié, pouvant comprendre au moins un hétéroatome tel que O, N ou S et R₂ et R₃ sont H.

Dans ce mode de mise en oeuvre de l'utilisation et du procédé de fonctionnalisation de l'invention, dans une première variante, n1 est égal à zéro et l'alcyne disubstitué utilisé dans l'invention a la formule :

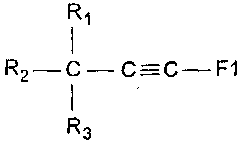

Dans une seconde variante préférée de ce mode de réalisation, n1 est égal à 1, et E1 est une chaine -C₆H₁₂-. Dans cette seconde variante préférée, l'alcyne disubstitué utilisé dans l'invention a la formule :

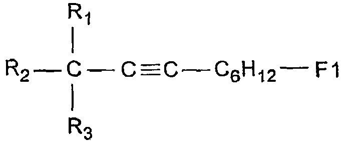

Dans ces deux variantes de l'invention, de préférence R₁, R₂ et R₃ sont H et F1 est un radical -COOH.

F1 étant un groupe apte à réagir avec un groupement réactif F2 d'une molécule d'intérêt, lorsque F1 est un radical -COOH, de préférence, le groupement réactif noté F2 de la molécule d'intérêt est de préférence un radical -NH₂.

Mais, dans un mode de mise en oeuvre tout particulièrement préféré du procédé de fonctionnalisation de l'invention et de l'utilisation de l'invention, l'alcyne disubstitué est un alcyne ou un hétéroalcyne cyclique, éventuellement substitué.

Dans ce cas, de préférence, l'alcyne disubstitué utilisé dans l'invention a la formule générale suivante : 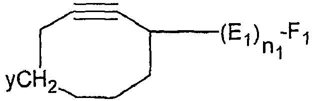 dans laquelle :
- y est un entier compris entre 1 et 5 inclus, et
- E1, n1 et F1 sont tels que définis pour les composés de formule I.

Dans une variante tout particulièrement préférée de l'invention, l'alcyne disubstitué cyclique est un cyclooctyne.

En effet, le groupe cyclooctyne est un groupe cyclique particulièrement stable.

Toujours lorsque l'alcyne disubstitué est un cycloalcyne, de préférence, E1 est une chaine -O-CH2- et F1 est un radical -COOH auquel cas, de préférence, le groupe F2 de la molécule d'intérêt est un radical -NH₂.

Le substrat en un matériau semi-conducteur, et ce dans tous les modes de réalisation et toutes les variantes du procédé et de l'utilisation de l'invention est de préférence en silicium non oxydé, en germanium non oxydé ou en alliages ou en mélanges de ceux-ci.

Quant à la molécule d'intérêt, elle a la formule II suivante :

F2-(E2)ₙ₂-X

dans laquelle :
- F2 est un groupe apte à réagir avec le groupe réactif F1 de l'alcyne disubstitué utilisé dans l'invention,
- E2 est une chaîne alkyle en C₁ à C₃₀, linéaire ou ramifiée, saturée ou insaturée, comprenant éventuellement des hétéroatomes et/ou des groupements aryle et/ou des groupements amines et/ou des groupements esters et/ou des groupements oxyamines et/ou des groupements oximes et/ou des groupements amides, et/ou éventuellement substitués par des atomes d'halogène. De préférence, E2 est une chaine alkyle en C₁ à C₅ linéaire pouvant comporter un hétéroatome tel que l'oxygène, l'azote ou le soufre.

De préférence, l'hétéroatome est un oxygène,
- n2 vaut 0 ou 1, et
- X est un groupement ayant des propriétés d'intérêt.

De préférence dans la formule II, le groupe réactif F2 est un radical -NH2. Quant au groupe E2, dans un mode réalisation préféré de l'invention, il s'agit d'une chaine -(CH₂)₂-O-CH₂-.

Quant au groupement X ayant les propriétés d'intérêt, il est choisi dans le groupe constitué d'une molécule de porphyrine, une molécule d'anthracène, une molécule de naphtalène, une molécule de fullerène, une molécule de polyoxométallate et un groupement férrocène.

Dans un mode de mise en oeuvre particulièrement préféré de l'utilisation du procédé de l'invention, il s'agit d'un groupement férrocène.

Dans le procédé et l'utilisation de l'invention, de préférence, le groupe E1 et/ou le groupe E2 ont au moins quatre chainons, afin de diminuer l'encombrement stérique à la surface du substrat en un matériau semi-conducteur au groupement d'intérêt X.

Le procédé de l'invention comprend a) la réaction du groupement F1 du composé de formule I avec le groupement F2 de la molécule d'intérêt de formule II et b) la réaction de la triple liaison de l'alcyne disubstitué de formule I de l'invention avec la surface du substrat à fonctionnaliser.

Quant au substrat, il est de préférence en un matériau semi-conducteur choisi parmi le silicium, le germanium et les mélanges de ceux-ci.

Dans le cas d'un substrat en silicium ou à base de silicium, c'est-à-dire contenant au moins 20% en moles de silicium, par rapport au nombre total de modes du matériau constituant le substrat, la réaction b) se fait par réaction d'hydrosilylation de la triple liaison de l'alcyne disubstitué de formule I avec les hydrogènes liés à la surface de silicium du substrat.

Dans le cas d'un substrat en germanium, ou d'un substrat à base de germanium, là encore, il s'agit d'une réaction entre la triple liaison de l'alcyne disubstitué de formule I utilisé dans l'invention et les hydrogènes liés à la surface de germanium du substrat.

On peut, bien entendu, comme cela apparaîtra clairement à l'homme de l'art, d'abord procéder à la réaction entre la triple liaison de l'alcyne disubstitué utilisé dans l'invention et la surface du substrat en matériau semi-conducteur tel que défini ci-dessus puis à la réaction du groupe réactif F1 avec le groupe réactif F2 de la molécule d'intérêt avec laquelle on souhaite fonctionnaliser la surface du substrat utilisé dans l'invention ou d'abord lier la molécule d'intérêt par réaction du groupe F1 de l'alcyne disubstitué de formule I avec le groupe réactif F2 de la molécule d'intérêt et ensuite seulement procéder au « greffage » du composé obtenu sur la surface du substrat, c'est-à-dire à la réaction de la triple liaison, de l'alcyne disubstitué utilisé dans l'invention avec la surface du substrat utilisé dans l'invention.

Lorsque l'on procède d'abord à la réaction entre la triple liaison de l'alcyne disubstitué dans l'invention, il peut être nécessaire de protéger le groupement réactif F1 avant cette réaction puis de déprotéger le groupement F1 pour le faire réagir avec le groupement F2.

Afin de mieux faire comprendre l'invention, on va en décrire maintenant à titre d'exemples purement illustratifs et non limitatifs plusieurs modes de mise en oeuvre.

Dans tous les exemples qui suivent, on a utilisé un substrat en silicium non oxydé d'une épaisseur de 500 µm et, comme groupement d'intérêt, un groupement ferrocène qui permet de vérifier facilement, par voltamétrie cyclique, que l'emploi d'alcynes disubstitués selon l'invention permet de fonctionnaliser la surface d'un substrat avec les groupements ferrocène, en nécessitant moins d'énergie d'activation (température de greffage plus basse) qu'avec les alcynes ou alcènes de l'art antérieur.

### EXEMPLE 1 DE REFERENCE :

Un alcyne monosubstitué selon l'art antérieur, l'éthynyl-ferrocène de formule I-E suivante : 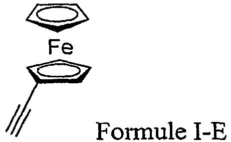 a été greffé sur le substrat de silicium à des températures de 100°C, 130°C et 180°C. Ce greffage a été effectué de la façon suivante :

Une surface de silicium préalablement hydrogénée par traitement au HF 1% est introduite dans une solution à 1mM de l'alcyne de référence de formule I-E dans le mesitylène. Le milieu réactionnel est chauffé (100°C / 130°C / 180°C) sous atmosphère d'argon pendant 2 h. Après refroidissement à température ambiante, la surface est lavée et soniquée dans le dichlorométhane et séchée sous argon.

Les résultats obtenus sont les suivants :
**A 180°C** (température de référence) :
   Le composé de formule I-E donne une signature électrochimique indiquant qu'il est bien greffé sur la surface.

La dérive de la ligne de base est un peu plus prononcée indiquant qu'il se forme un peu d'oxyde en surface. Il y a en effet toujours une compétition entre la réaction de greffage et la réaction de formation d'oxyde (due aux traces d'oxygène et d'eau dans le milieu). Plus le composé à greffer est réactif, moins cet oxyde se forme:
**A 130°C :**
   Cette température est généralement trop faible pour faire réagir les alcynes monosubstitués.

On observe cela sur le composé de formule I-E dont l'activité redox est visible mais très fortement masquée par une forte oxydation du substrat indiquant que le ferrocène n'a que partiellement réagi.

**A 100°C :**
Réactivité nulle du composé de formule I-E.

On a alors utilisé des alcynes disubstitués selon l'invention pour réaliser le même type de greffage.

Les résultats sont les suivants.

### EXEMPLE 2 :

L'alcyne disubstitué selon l'invention utilisé dans cet exemple est l'acide cyclooct-1-yn-3-glycolique de formule suivante :

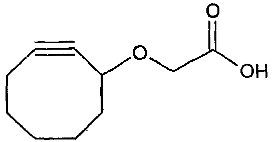

La molécule d'intérêt est une molécule ayant un groupement férrocène de formule :

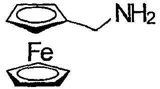

On a procédé de la façon suivante :

### 1- Synthèse du 8,8-dibromobicyclo[5.1.0]octane ⁵⁻⁸

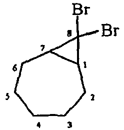

Dans un ballon sec et sous argon sont introduits 3,65 g de cycloheptène (soit 38 mmol) puis 8,52 g de t-BuOK (soit 76 mmol, 2 éq.) et 9 mL de pentane distillé au préalable. La solution jaune crème est agitée vigoureusement et placée dans un bain glace/sel. Puis 4,9 mL de bromoforme (soit 57 mmol, 1,5 éq.) sont ajoutés goutte à goutte. Lors des premiers ajouts, un dégagement gazeux assez violent est observé, puis au fur et à mesure de l'addition la solution devient ocre brun. Au cours de l'addition, environ 5 mL de pentane ont été ajoutés pour permettre une agitation correcte de la solution. Une fois l'addition terminée, le mélange est laissé revenir à température ambiante toute la nuit, sous argon et agitation vigoureuse.

Environ 50 mL d'eau sont ensuite ajoutés et le pH neutralisé avec HCl 1M. Les phases organique et aqueuse sont séparées ; la phase aqueuse est extraite avec 3x20 mL de pentane et la phase pentane est lavée avec 3x20 mL d'eau. La phase organique est ensuite séchée sur MgSO₄ et le solvant évaporé sous vide. Une huile jaune orangée est obtenue avec une masse m = 10,814 g.

Le produit est ensuite purifié par une simple filtration sur silice avec comme éluant cyclohexane/AcOEt 5%. Une huile incolore de masse totale 9,100 g est obtenue après purification, soit avec un rendement de 90 % (litt. 52-65% pour le 9,9-dibromobicyclo[6.1.0]nonane).

R_{f} (cyclohexane 95/ AcOEt 5) = 0.85 ;
RMN ¹H (CDCl₃, 200 MHz) : δ (ppm) 1.05-1.22 (m, 3H) ; 1.34 (qq, J = 1-7.5 Hz, 2H) ; 1.68 (ddd, J = 1.5-4-10.5 Hz, 2H) ; 1.76-1.92 (m, 3H) ; 2.23 (dtq, J = 14-6-1 Hz, 2H) ;
RMN ¹³C (CDCl₃, 50 MHz) : δ (ppm) 40.7 (C₈ quat.); 34.8 (2, C₁₋₇) ; 32.2 (C₄) ; 28.9 (2, C₂₋₆) ; 27.9 (2, C₃₋₅) ;
Masse : ESI⁺ m/z [M+H₂O+H]⁺ = 284.4 pour 284.9 ; [M+HBr+Na]⁺ = 368.5 pour 369.93
IR : ν (cm⁻¹) 2921 ν_{CH}; 2853 ν_{CH2}; 1457 δ_{CH} ; 1354 δ_{CH} tertiaire ; 735 ν_{CBr} ;

### 2- Synthèse du 2-bromo-cyclooctèn-3-glycolate de méthyle

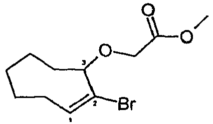

A une solution de 8,8-dibromobicyclo[5.1.0]octane (2,5 g soit 9,3 mmol) et de glycolate de méthyle (6,35 mL soit 83,9 mmol) dissous dans 5 mL de toluène anhydre dans un ballon sec, sous Ar et protégé de la lumière par un film d'aluminium, sont ajoutés 3,85 g de perchlorate d'argent (soit 18,6 mmol). La réaction est agitée pendant 1 h 30 à température ambiante, puis les sels d'argent sont filtrés sur fritté et lavés avec AcOEt. La solution est concentrée sous vide pour donnée une huile visqueuse brune qui est purifiée par chromatographie sur gel de silice (2-15% AcOEt dans le cyclohexane) pour obtenir le produit sous forme d'huile jaune de masse m= 1,6 g, soit 65 % de rendement (litt. 22% ⁵).

R_{f} (éther de pétrole/AcOEt 5%) = 0,25 ;
RMN ¹H (CDCl₃, 200 MHz) : δ (ppm) 0.7-2.2 (m, 8H) ; 2.28 (m, 1H) ; 2.70 (ddd, J= 5- 11,5-23,5 Hz, 1H) ; 3.72 (s, 3H, OMe) ; 3.94 (d, J_{9-9'}= 16,5 Hz, 1H, H₉) ; 4.10 (dd, J₃₋₄ = 5 Hz, J_{3-4'} = 10 Hz, 1H, H₃) ; 4.23 (d, J_{9-9'} = 16,5 Hz, 1H, H_{9'}) ; 6.20 (dd, J₁₋₈=4 Hz, J_{1-8'}=11,5 Hz, 1H, H₁) ;
RMN ¹³C (CDCl₃, 50 MHz) : 26.2 ; 28.0 ; 33.4 ; 36.5 ; 39.3 (C₄₋₈) ; 51.8 (C₃) ; 65.4 (C₁₁); 84.8 (C₉) ; 131.4 (C₂ quat.) ; 133 (C₁) ; 170.7 (C₁₀ quat.) ;
Masse : ESI⁺ m/z [M+H]+ = 277.6-279.6 ; [M+Na]+ = 299.6-306.1 ; [2M+H]+ = 553.0-555.0-557.0; [2M+Na]+ = 575.0-576.9-578.8;
IR : ν (cm⁻¹) 2931 ν_{CH} ; 2856 ν_{CH2} ; 1754 ν_{C=O}; 1445 ν_{C=C} trans ; 1132 ν_{COC} éther

### 3- Synthèse de l'acide cyclooct-1-yn-3-glycolique

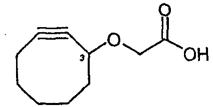

A 250 mg de 2-bromo-cyclooctèn-3-glycolate de méthyle (soit 0,90 mmol) est ajouté une solution de méthylate de sodium à 0.5M dans le méthanol. Le mélange est agité pendant 2 jours à température.

La réaction est acidifiée avec HCl 1M puis extraite avec AcOEt, séchée sur MgSO₄ et les solvants sont évaporés. Le produit est purifié sur gel de silice avec AcOEt et est obtenu sous forme d'huile jaune de masse 120 mg, soit 80% de rendement.

RMN ¹H (CDCl₃, 200 MHz) : δ(ppm) 1.3-2.3 (m, 10H) ; 4.45 (d, J₉₉, = 17 Hz, 1H, H₉) ; 4.50 (m, 1H, H₃) ; 4.58 (d, J_{9-9'} = 17 Hz, 1H, H_{9'}) ;
RMN ¹³C (CDCl₃, 50 MHz) : δ(ppm)
Masse : ESI⁺ m/z

### 4- Synthèse du cyclooctyne-ferrocène de formule I-A

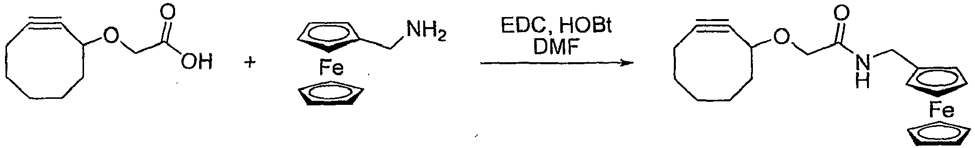

A une solution de l'acide cyclooct-1-yn-3-glycolique (33 mg soit 0,18 mmol) dans 2mL de DMF anhydre sont ajoutés 41 mg d'EDC (soit 0.21 mmol) et 28 mg d'HOBt (soit 0.21 mmol). Après agitation à température ambiante sous argon pendant 15 min, une solution de ferrocène-methylamine⁹ (45 mg soit 0.21 mmol) dans 0,8 mL de DMF anhydre est agitée goutte à goutte. L'agitation est maintenue pendant 24h.

Après addition de 10 mL d'eau, le mélange réactionnel est extrait au dichlorométhane. La phase organique est séchée sur Na₂SO₄ anhydre, filtrée et concentrée sous vide. Le produit est purifié sur gel de silice (DCM/MeOH : 99/1) et est obtenu sous forme d'une huile jaune (21 mg soit 30% de rendement).

### Activité redox du composé de formule I-A en solution :

On a vérifié que ce composé a bien une activité redox en solution.

Les mesures de voltamétrie cyclique ont été effectuées en utilisant un système à trois électrodes : l'électrode de travail est une électrode de platine, l'électrode de référence est une électrode à calomel saturé et la contre-électrode est une électrode de platine. La solution étudiée est une solution à 2mM de cyclooctyne-ferrocène dans l'electrolyte Bu₄NPF₆(0,1M)/carbonate de propylène.

On identifie un pic d'oxydation à 0,5V et un pic de réduction à 0,35V. On vérifie que la modification du ferrocène par le cyclooctyne ne détruit pas son activité redox.

### Greffage sur surface de silicium du composé de formule I-A à différentes températures:

Une surface de silicium préalablement hydrogénée par traitement au HF 1% est introduite dans une solution à 1mM de l'alcyne considéré (cyclooctyne-ferrocène ou ferrocène-alcyne) dans le mesitylène. Le milieu réactionnel est chauffé (100°C / 130°C / 180°C) sous atmosphère d'argon pendant 2 h. Après refroidissement à température ambiante, la surface est lavée et soniquée dans le dichlorométhane et séchée sous argon.

A 180°C (température de référence) :
Le I-A composé donne une signature électrochimique indiquant qu'il est bien greffé sur la surface.

La dérive de la ligne de base est un peu plus prononcée qu'avec le composé de formule I-E de référence, ce qui indique que dans ce cas, il se forme un peu d'oxyde en surface.

Il y a en effet toujours une compétition entre la réaction de greffage et la réaction de formation d'oxyde (due aux traces d'oxygène et d'eau dans le milieu). Plus le composé à greffer est réactif, moins cet oxyde se forme.

Cette première expérience montre qu'on a une plus grande réactivité du composé de formule I-A par rapport au composé de référence de formule I-E.

130°C :
Cette température est généralement trop faible pour faire réagir les alcynes monosubstitués.

On observe cela sur le *ferrocène-alcyne de référence* dont l'activité redox est visible mais très fortement masquée par une forte oxydation du substrat indiquant que le ferrocène n'a que partiellement réagi.

Par contre la signature redox du composé de formule I-A est beaucoup plus claire et l'oxydation de la surface assez réduite (comparable à celle obtenue à 180°C avec le composé de référence de formule I-E).

100°C :
Réactivité nulle du composé de référence de formule I-E.

Réactivité très faible du composé de formule I-A, même si elle existe. On observe majoritairement l'oxydation de la surface.

### EXEMPLE 3 :

L'alcyne disubstitué selon l'invention utilisé ici est l'alcyne cyclooct-yn-3-glycolique, comme à l'exemple 2 et la molécule de férrocène la formule suivante:

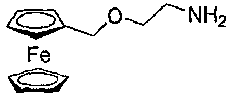

Pour obtenir l'acide cyclooct-1-in-3 glycolique, on a procédé comme à l'exemple 1.

Puis, à une solution de l'acide cyclooct-1-yn-3-glycolique (34 mg soit 0,19 mmol) dans 2mL de DMF anhydre sont ajoutés 41 mg d'EDC (soit 0,21 mmol) et 28 mg d'HOBt (soit 0,21 mmol). Après agitation à température ambiante sous argon pendant 15 min, le 2-aminoéthyl-ferrocényl méthyléther (70 mg soit 0,21 mmol) est ajouté. L'agitation est maintenue pendant 24h. Après évaporation sous vide du solvant, le résidu est redissous dans du dichlorométhane. La phase organique est lavée à l'eau, séchée sur Na₂SO₄ anhydre, filtrée et concentrée sous vide. Le produit est purifié sur gel de silice (DCM/MeOH : 98/2) et est obtenu sous forme d'une huile jaune (31 mg soit 39% de rendement).

On obtient le composé de formule I-B suivant :

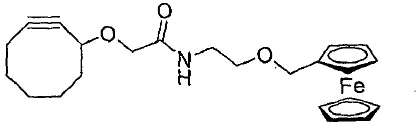

Activité redox du composé de formule I-B en solution :
On a d'abord vérifié que ce composé a bien une activité redox en solution.

Pour cela, le composé de formule I-B a été mis en solution, son activité redox a été testée par voltamétrie cyclique en utilisant un système à trois électrodes. L'électrode de travail est une électrode de platine, l'électrode de référence est une électrode à calomel saturé et la contre-électrode est une électrode de platine. L'électrolyte utilisé est une solution à 1M de Bu4NPF6 dans le carbonate de propylène. La mesure de voltamétrie cyclique a été effectuée à une vitesse de balayage de 500 mV/s.

On identifie un pic d'oxydation à 0,448 V et un pic de réduction à 0,317 V. On vérifie ainsi que la modification du ferrocène par le cyclooctyne ne détruit pas l'activité redox du ferrocène.

Greffage sur surface de silicium du composé de formule I-B à différentes températures:
Une surface de silicium préalablement hydrogénée par traitement au HF 1% est introduite dans une solution à 1mM de composé de formule I-B dans le mesitylène. Le milieu réactionnel est chauffé (100°C / 130°C / 180°C) sous atmosphère d'argon pendant 2 h. Après refroidissement à température ambiante, la surface est lavée et soniquée dans le dichlorométhane et séchée sous argon.

Dans le cas du composé I-B, le bras espaceur entre le cyclooctyne et la molécule redox (de ferrocène) est plus long. Ce facteur permet un greffage plus efficace (par diminution de la gêne stérique) car le greffage est effectif dès 100°C. Cependant, à cette température, le greffage semble toutefois moins efficace puisqu'on observe une réoxydation plus importante du substrat (ΔE(ox/red) plus grand). Au contraire, dès 130 °C, les résultats montrent (tant du point de vue des ΔE(ox/red) que de la densité de greffage) que le greffage est très performant. Dans ce cas-là, il apparaît donc qu'il y a une activation thermique suffisante pour permettre le greffage et qu'il y a une meilleure organisation de la couche formée due au bras espaceur plus long, s'accompagnant d'une plus faible réoxydation du substrat.

On voit à partir des exemples 2 et 3 que l'alcyne cyclique permet le greffage du groupement d'intérêt, ici un groupement ferrocène, sur une surface de Si-H à des températures inférieures à celle généralement utilisée (180°C) avec les alcynes monosubstitués utilisés dans l'art antérieur.

### EXEMPLE 4 :

L'alcyne disubstitué selon l'invention utilisé ici est l'acide butanoïque de formule suivante : 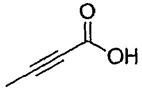 et la molécule de férrocène a la formule suivante :

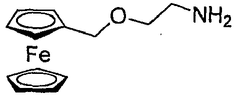

A une solution de l'acide butanoïque (30 mg soit 0,36 mmol) dans 2mL de DMF anhydre sont ajoutés 78 mg d'EDC (soit 0,41 mmol) et 57 mg d'HOBt (soit 0,42 mmol). Après agitation à température ambiante sous argon pendant 15 min, le 2-aminoethyl-ferrocenyl méthyléther (102 mg soit 0,40 mmol) est ajouté. L'agitation est maintenue pendant 24h. Après évaporation sous vide du solvant, le résidu est redissous dans du dichlorométhane. La phase organique est lavée à l'eau, séchée sur Na₂SO₄ anhydre, filtrée et concentrée sous vide. Le produit est purifié sur gel de silice (DCM/MeOH : 95/5) et est obtenu sous forme d'une huile jaune (30 mg soit 26% de rendement).

On obtient le composé de formule I-C suivante :

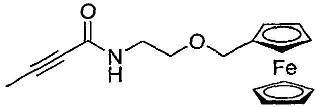

Activité redox de cette molécule en solution :
On a vérifié que ce composé a bien une activité redox en solution.

Le composé de formule I-C a été mis en solution, son activité redox a été testée par voltamétrie cyclique en utilisant un système à trois électrodes. L'électrode de travail est une électrode de platine, l'électrode de référence est une électrode à calomel saturé et la contre-électrode est une électrode de platine. L'électrolyte utilisé est une solution à 1M de Bu4NPF6 dans le carbonate de propylène. La mesure de voltamétrie cyclique a été effectuée à une vitesse de balayage de 500 mV/s.

On identifie un pic d'oxydation à 0,494 V et un pic de réduction à 0,345 V. On vérifie ainsi que la modification du ferrocène par l'alcyne disubstitué ne détruit pas l'activité redox du ferrocène.

Greffage sur surface de silicium à différentes températures:
Une surface de silicium préalablement hydrogénée par traitement au HF 1% est introduite dans une solution à 1mM de composé de formule I-C dans le mesitylène. Le milieu réactionnel est chauffée (100°C / 130°C / 180°C) sous atmosphère d'argon pendant 2 h. Après refroidissement à température ambiante, la surface est lavée et soniquée dans le dichlorométhane et séchée sous argon.

Dans le cas du composé I-C, le greffage sur Si-H est effectif dès 100 °C. Pour les greffages réalisés à 100 °C et 130 °C, la différence de potentiel entre l'oxydation et la réduction (ΔE(ox/red)) est faible (de l'ordre de 100 mV).

### EXEMPLE 5 :

L'alcyne disubstitué selon l'invention utilisé ici est l'acide 9-undécynoique de formule suivante : 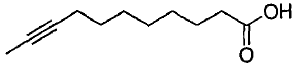 et la molécule d'intérêt est la même molécule de férrocène que celle utilisée à l'exemple 3.

On a procédé de la façon suivante :
A une solution de l'acide 9-undécynoïque (107 mg soit 0,59 mmol) dans 5 mL de DMF anhydre sont ajoutés 127 mg d'EDC (soit 0,66 mmol) et 90 mg d'HOBt (soit 0,67 mmol). Après agitation à température ambiante sous argon pendant 15 min, le 2-aminoethyl-ferrocenyl méthyléther (171 mg soit 0,66 mmol) est ajouté. L'agitation est maintenue pendant 24h. Après évaporation sous vide du solvant, le résidu est redissous dans du dichlorométhane. La phase organique est lavée à l'eau, séchée sur Na₂SO₄ anhydre, filtrée et concentrée sous vide. Le produit est purifié sur gel de silice (DCM/MeOH : 98/2) et est obtenu sous forme d'une huile orange (175 mg soit 70% de rendement).

Le composé obtenu est le composé de formule I-D suivante :

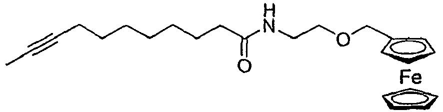

Activité redox de ce composé en solution :
On a vérifié que cette molécule a bien une activité redox en solution.

Le composé de formule I - D a été mis en solution, son activité redox a été testée par voltamétrie cyclique en utilisant un système à trois électrodes. L'électrode de travail est une électrode de platine, l'électrode de référence est une électrode à calomel saturé et la contre-électrode est une électrode de platine. L'électrolyte utilisé est une solution à 1M de Bu4NPF6 dans le carbonate de propylène. La mesure de voltamétrie cyclique a été effectuée à une vitesse de balayage de 500 mV/s.

On identifie un pic d'oxydation à 0,463 V et un pic de réduction à 0,292 V. On vérifie ainsi que la modification du ferrocène par l'alcyne disubstitué ne détruit pas l'activité redox du ferrocène.

Greffage sur surface de silicium à différentes températures:
Une surface de silicium préalablement hydrogénée par traitement au HF 1% est introduite dans une solution à 1mM de composé de formule I-C dans le mesitylène. Le milieu réactionnel est chauffée (100°C / 130°C / 180°C) sous atmosphère d'argon pendant 2 h. Après refroidissement à température ambiante, la surface est lavée et soniquée dans le dichlorométhane et séchée sous argon.

Dans le cas du composé I-D, le greffage est effectif dès 100°C. Toutefois, le greffage est plus efficace lorsqu'il est réalisé à 180 °C, où l'on observe un faible ΔE(ox/red) c'est à dire une absence de réoxydation du substrat.

Les greffages réalisés à 100 °C et à 130 °C sont, comparativement au composé I-C, bien moins efficaces. Cette différence est expliquée par une absence d'activation en α du composé I-D, comparativement au composé I-C où la fonction amide électroattractrice permet d'accroître la réactivité de l'alcyne.

## Revendications

1. Utilisation d'un composé de formule I suivante :
A-(E1)ₙ₁-F1 Formule I
dans laquelle :
- A est choisi parmi :
1) un alcyne de formule : 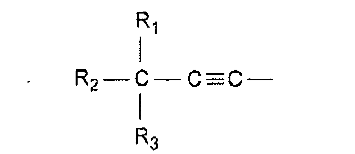 dans laquelle :
- R₁, R₂ et R₃ sont identiques ou différents et sont indépendamment l'un de l'autre choisis dans le groupe formé par un atome d'hydrogène ; un atome d'halogène ; un groupe -OH ; un groupe -NH₂ ; un groupe -SH et une chaîne alkyle en C₁ à C₃₀, linéaire ou ramifiée, saturée, comprenant éventuellement des hétéroatomes et/ou des groupements aryles et/ou des groupements anilines et/ou des groupements esters et/ou des groupements oxyamines et/ou des groupements oximes et/ou des groupements amides, et/ou éventuellement substituée par des atomes d'halogène ; et
2) un cycloalcyne ou un hétérocycloalcyne à 8 à 12 chaînons, éventuellement substitués par un groupement R₁ tel que défini ci-dessus,
E1 est une chaîne alkyle en C₁ à C₃₀, linéaire ou ramifiée, saturée ou insaturée, comprenant éventuellement des hétéroatomes et/ou des groupements aryle et/ou des groupements amines et/ou des groupements esters et/ou des groupements oxyamines et/ou des groupements oximes et/ou des groupements amides, et/ou éventuellement substitués par des atomes d'halogène, de préférence E1 est une chaîne alkyle en C₁ à C₅, linéaire ou ramifiée, saturée, pouvant comprendre au moins un hétéroatome,
- n1 = 0 ou 1, et
- F1 est un groupe réactif apte à réagir avec un groupe réactif F2 d'une molécule d'intérêt de formule II suivante :
F2-(E2)ₙ₂-X Formule II
dans laquelle :
- F2 est un groupe réactif apte à réagir avec le groupe réactif F1 du composé de formule I, de préférence F1 et F2 sont choisis parmi un groupe carboxyle, une entité radicalaire, un groupe hydroxyle, un groupe alcool, un groupe amine, un groupe ester, un groupe aldéhyde, un groupe hydrazide, un groupe cétone, un groupe époxy, un groupe isocyanate, un groupe maléimide, un groupe thiol, et un groupe oxyamine,
- E2 est une chaîne alkyle en C₁ à C₃₀, linéaire ou ramifiée, saturée ou insaturée, comprenant éventuellement des hétéroatomes et/ou des groupements aryle et/ou des groupements amines et/ou des groupements esters et/ou des groupements oxyamines et/ou des groupements oximes et/ou des groupements amides, et/ou éventuellement substitués par des atomes d'halogène,
- n2 = 0 ou 1, et
- X est un groupement ayant des propriétés d'intérêts,
pour la fonctionnalisation de la surface d'un substrat en un matériau semi-conducteur, de préférence choisi parmi le silicium, le germanium et les alliages et les mélanges de ceux-ci, avec des molécules d'intérêt.

2. Utilisation selon la revendication 1 **caractérisée en ce que**, dans A, R₁ et R₂ et R₃, lorsque présents, sont identiques ou différents et sont indépendamment l'un de l'autre choisis dans le groupe formé par un atome d'hydrogène ; un atome d'halogène et une chaîne alkyle en C₁ à C₃₀, linéaire ou ramifiée, saturée, comprenant éventuellement des hétéroatomes et/ou des groupements aryles et/ou des groupements amines, et/ou éventuellement substituée par des atomes d'halogène.

3. Utilisation selon l'une quelconque des revendications précédentes **caractérisée en ce que**, dans A, R₁ et R₂ et R₃, lorsque présents, sont H et R₁ est une chaîne alkyle en C₁ à C₅, linéaire ou ramifiée, pouvant comprendre au moins un hétéroatomes.

4. Utilisation selon l'une quelconque des revendications précédentes **caractérisée en ce que** dans la formule I, A est un cyclooctyne non substitué.

5. Utilisation selon la revendication 1 **caractérisée en ce que** dans la formule I :
- dans A, R₁ et R₂ et R₃, lorsque présents, sont H,
- n vaut 0,
- F1 est un radical -COOH, et
- F2 est un radical -NH₂.

6. Utilisation selon la revendication 1 **caractérisée en ce que** dans la formule I :
- dans A, R₁ et R₂ et R₃, lorsque présents, sont H,
- n2 = 1,
- E1 est une chaine -C₆H₁₂-,
- F1 est un radical -COOH, et
- F2 est un radical -NH₂.

7. Utilisation selon la revendication 1 **caractérisée en ce que** dans la formule I :
- A est un cyclooctyne non substitué,
- n1 = 1,
- E1 est une chaine -O-CH₂-,
- F1 est un radical -COOH, et
- F2 est un radical -NH₂.

8. Utilisation selon l'une quelconque des revendications précédentes **caractérisée en ce que** dans la formule II, E2 est une chaîne -(CH₂)₂-O-CH₂-.

9. Utilisation selon l'une quelconque des revendications précédentes **caractérisée en ce que** dans la formule II, X est choisi dans le groupe constitué d'une molécule de porphyrine, une molécule d'anthracène, une molécule de naphtalène, une molécule de fullerène, une molécule de polyoxométallate et un groupement férrocène, de préférence X est un groupement férrocène.

10. Procédé de fonctionnalisation de la surface d'un substrat en un matériau semi-conducteur **caractérisé en ce qu'**il comprend les étapes suivantes :
a) réaction du groupe réactif F1 d'un composé de formule I de formule suivante :
A-(E1)ₙ₁-F1 Formule I
dans laquelle :
- A est choisi parmi :
1) un alcyne de formule : 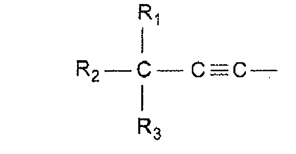 dans laquelle :
- R₁, R₂ et R₃ sont identiques ou différents et sont indépendamment l'un de l'autre choisis dans le groupe formé par un atome d'hydrogène ; un atome d'halogène ; un groupe -OH ; un groupe -NH₂ ; un groupe -SH et une chaîne alkyle en C₁ à C₃₀, linéaire ou ramifiée, saturée, comprenant éventuellement des hétéroatomes et/ou des groupements aryles et/ou des groupements amines et/ou des groupements esters et/ou des groupements oxyamines et/ou des groupements oximes et/ou des groupements amides, et/ou éventuellement substituée par des atomes d'halogène ; et
2) un cycloalcyne ou un hétérocycloalcyne 8 à 12 chaînons, éventuellement substitués par un groupement R₁ tel que défini ci-dessus,
- E1 est une chaîne alkyle en C₁ à C₃₀, linéaire ou ramifiée, saturée ou insaturée, comprenant éventuellement des hétéroatomes et/ou des groupements aryle et/ou des groupements amines et/ou des groupements esters et/ou des groupements oxyamines et/ou des groupements oximes et/ou des groupements amides, et/ou éventuellement substitués par des atomes d'halogène, de préférence E1 est une chaîne alkyle en C₁ à C₅, linéaire ou ramifiée, saturée, pouvant comprendre au moins un hétéroatome,
- n1 = 0 ou 1,
avec un groupe réactif F2 d'une molécule d'intérêt de formule II suivante :
F2-(E2)ₙ₂-X Formule II
dans laquelle :
- F2 est un groupe réactif apte à réagir avec le groupe réactif F1 du composé de formule I, de préférence F1 et F2 sont choisis parmi un groupe carboxyle, une entité radicalaire, un groupe hydroxyle, un groupe alcool, un groupe amine, un groupe ester, un groupe aldéhyde, un groupe hydrazide, un groupe cétone, un groupe époxy, un groupe isocyanate, un groupe maléimide, un groupe thiol, et un groupe oxyamine,
- E2 est une chaîne alkyle en C₁ à C₃₀, linéaire ou ramifiée, saturée ou insaturée, comprenant éventuellement des hétéroatomes et/ou des groupements aryle et/ou des groupements amines et/ou des groupements esters et/ou des groupements oxyamines et/ou des groupements oximes et/ou des groupements amide, et/ou éventuellement substitués par des atomes d'halogène,
- n2 = 0 ou 1, et
- X est un groupement ayant des propriétés d'intérêts,
b) réaction de la triple liaison du composé de formule I avec le matériau semi-conducteur, le matériau semi-conducteur étant, de préférence, choisi parmi le silicium, le germanium et leurs alliages et mélanges.

11. Procédé selon la revendication 10 **caractérisé en ce que** l'étape b) est effectuée avant l'étape a).

12. Procédé selon la revendication 11 **caractérisé en ce qu'**il comprend de plus :
- une étape a1) de protection du groupe réactif F1, avant la mise en oeuvre de l'étape a), et
- une étape b1) de déprotection du groupe réactif F1, avant la mise en oeuvre de l'étape b).

13. Procédé selon la revendication 10 **caractérisé en ce que** l'étape a) est effectuée avant l'étape b).

14. Procédé selon l'une quelconque des revendications 10 à 13 **caractérisé en ce que**, dans A, R₁ et R₂ et R₃, lorsque présents, sont identiques ou différents et sont indépendamment l'un de l'autre choisis dans le groupe formé par un atome d'hydrogène ; un atome d'halogène et une chaîne alkyle en C₁ à C₃₀, linéaire ou ramifiée, saturée, comprenant éventuellement des hétéroatomes et/ou des groupements aryles et/ou des groupements aminés, et/ou éventuellement substituée par des atomes d'halogène.

15. Procédé selon l'une quelconque des revendications 10 à 14 **caractérisé en ce que**, dans A, R₂ et R₃ sont H et R₁ est une chaîne alkyle en C₁ à C₅, linéaire ou ramifiée, pouvant comprendre au moins un hétéroatome.

16. Procédé selon l'une quelconque des revendications 10 à 15 **caractérisé en ce que** dans la formule I :
- dans A, R₁ et R₂ et R₃, lorsque présents, sont H,
- n1 vaut 0,
- F1 est un radical -COOH, et
- F2 est un radical -NH₂.

17. Procédé selon l'une quelconque des revendications 10 à 16 **caractérisé en ce que** dans la formule I :
- dans A, R₁ et R₂ et R₃, lorsque présents, sont H,
- n1 = 1,
- E1 est une chaine -C₆H₁₂-,
- F1 est un radical -COOH, et
- F2 est un radical -NH₂.

18. Procédé selon l'une quelconque des revendications 10 à 15 **caractérisé en ce que** dans la formule I, A est un cyclooctyne non substitué.
- n1=1,
- E1 est une chaine -O-CH₂-,
- F1 est un radical -COOH, et
- F2 est un radical -NH₂.

19. Procédé selon l'une quelconque des revendications 10 à 18 **caractérisé en ce que** dans la formule II, E2 est une chaine -(CH₂)₂-O-CH₂-.

20. Procédé selon l'une quelconque des revendications 10 à 19 **caractérisé en ce que** dans la formule II, X est choisi dans le groupe constitué d'une molécule de porphyrine, une molécule d'anthracène, une molécule de naphtalène, une molécule de fullerène, une molécule de polyoxométallate et un groupement férrocène.

21. Procédé selon l'une quelconque des revendications 10 à 20 **caractérisé en ce que** dans la formule II, X est un groupement férrocène.

## Patentansprüche

1. Verwendung einer Verbindung der folgenden Formel I:
A-(E1)ₙ₁-F1 Formel I
in der:
- A ausgewählt ist aus:
1) einem Alkin der Formel: 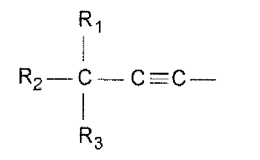 in der:
- R₁, R₂ und R₃ identisch oder unterschiedlich sind und unabhängig voneinander ausgewählt sind aus der Gruppe, bestehend aus einem Wasserstoffatom; einem Halogenatom; einer Gruppe -OH; einer Gruppe -NH₂; einer Gruppe -SH und einer linearen oder verzweigten, gesättigten C₁-C₃₀-Alkylkette, die gegebenenfalls Heteroatome und/oder Arylgruppierungen und/oder Amingruppierungen und/oder Estergruppierungen und/oder Oxyamingruppierungen und/oder Oximgruppierungen und/oder Amidgruppierungen umfasst und/oder gegebenenfalls mit Halogenatomen substituiert ist und
2) einem Cycloalkin oder einem Heterocycloalkin mit 8 bis 12 Kettengliedern, die gegebenenfalls mit einer R₁-Gruppierung, wie sie oben definiert ist, substituiert sind,
E1 eine lineare oder verzweigte, gesättigte oder ungesättigte C₁-C₃₀-Alkylkette ist, die gegebenenfalls Heteroatome und/oder Arylgruppierungen und/oder Amingruppierungen und/oder Estergruppierungen und/oder Oxyamingruppierungen und/oder Oximgruppierungen und/oder Amidgruppierungen umfasst und/oder gegebenenfalls mit Halogenatomen substituiert ist, E1 vorzugsweise eine lineare oder verzweigte, gesättigte C₁-C₅-Alkylkette ist, die wenigstens ein Heteroatom umfassen kann;
- n1 = 0 oder 1 und
- F1 eine reaktive Gruppe ist, die in der Lage ist, mit einer reaktiven Gruppe F2 eines Moleküls von Interesse mit der folgenden Formel II zu reagieren:
F2-(F2)ₙ₂-X Formel II
in der:
- F2 eine reaktive Gruppe ist, die geeignet ist, mit der reaktiven Gruppe F1 der Verbindung der Formel I zu reagieren, F1 und F2 vorzugsweise aus einer Carboxylgruppe, einer radikalischen Einheit, einer Hydroxylgruppe, einer Alkoholgruppe, einer Amingruppe, einer Estergruppe, einer Aldehydgruppe, einer Hydrazidgruppe, einer Ketongruppe, einer Epoxygruppe, einer Isocyanatgruppe, einer Maleimidgruppe, einer Thiolgruppe und einer Oxyamingruppe ausgewählt sind,
- E2 eine lineare oder verzweigte, gesättigte oder ungesättigte C₁-C₃₀-Alkylkette ist, die gegebenenfalls Heteroatome und/oder Arylgruppierungen und/oder Amingruppierungen und/oder Estergruppierungen und/oder Oxyamingruppierungen und/oder Oximgruppierungen und/oder Amidgruppierungen umfasst und/oder gegebenenfalls mit Halogenatomen substituiert ist,
- n2 = 0 oder 1 und
- X eine Gruppierung mit Eigenschaften von Interesse ist,
für die Funktionalisierung der Oberfläche eines Substrates aus einem Halbleitermaterial, das vorzugsweise aus Silicium, Germanium und Legierungen und Gemischen dieser ausgewählt ist, mit Molekülen von Interesse.

2. Verwendung gemäß Anspruch 1, **dadurch gekennzeichnet, dass** in A R₁ und R₂ und R₃, wenn vorhanden, gleich oder verschieden sind und unabhängig voneinander aus der Gruppe, bestehend aus einem Wasserstoffatom; einem Halogenatom und einer linearen oder verzweigten, gesättigten C₁-C₃₀-Alkylkette, die gegebenenfalls Heteroatome und/oder Arylgruppierungen und/oder Amingruppierungen umfasst und/oder gegebenenfalls mit Halogenatomen substituiert ist, ausgewählt sind.

3. Verwendung gemäß einem der vorangehenden Ansprüche, **dadurch gekennzeichnet, dass** in A R₁ und R₂ und R₃, wenn vorhanden, H sind und R₁ eine lineare oder verzweigte C₁-C₅-Alkylkette ist, die wenigstens ein Heteroatom umfassen kann.

4. Verwendung gemäß einem der vorangehenden Ansprüche, **dadurch gekennzeichnet , dass** in der Formel I A ein nichtsubstituiertes Cyclooctin ist.

5. Verwendung gemäß Anspruch 1, **dadurch gekennzeichnet, dass** in der Formel I:
- in A R₁ und R₂ und R₃, wenn vorhanden, H sind,
- n1 den Wert 0 hat,
- F1 ein Rest -COOH ist und
- F2 ein Rest -NH₂ ist.

6. Verwendung gemäß Anspruch 1, **dadurch gekennzeich-net,** dass in der Formel I:
- in A R₁ und R₂ und R₃, wenn vorhanden, H sind,
- n2 = 1,
- E1 eine -C₆H₁₂-Kette ist,
- F1 ein Rest -COOH ist und
- F2 ein Rest -NH₂ ist.

7. Verwendung gemäß Anspruch 1, dadurch **gekennzeich-net,** dass in der Formel I:
- A ein nichtsubstituiertes Cyclooctin ist,
- n1 = 1,
- E1 eine -O-CH₂-Kette ist,
- F1 ein Rest -COOH ist und
- F2 ein Rest -NH₂ ist.

8. Verwendung gemäß einem der vorangehenden Ansprüche, **dadurch gekennzeichnet, dass** in der Formel II E2 eine - (CH₂)₂-O-CH₂-Kette ist.

9. Verwendung gemäß einem der vorangehenden Ansprüche, **dadurch gekennzeichnet dass** in der Formel II X aus der Gruppe, bestehend aus einem Porphyrinmolekül, einem Anthracenmolekül, einem Naphthalinmolekül, einem Fullerenmolekül, einem Polyoxometallatmolekül und einer Ferrocengruppierung, ausgewählt ist, X vorzugsweise eine Ferrocengruppierung ist.

10. Verfahren zur Funktionalisierung der Oberfläche eines Substrates aus Halbleitermaterial, **dadurch gekenn**- **zeichnet,** dass es die folgenden Stufen umfasst:
a) Reaktion der reaktiven Gruppe F1 einer Verbindung der folgenden Formel I:
R-(E1)ₙ₁-F1 Formel I
in der:
- A ausgewählt ist aus:
1) einem Alkin der Formel: 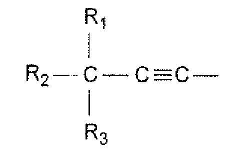 in der:
- R₁, R₂ und R₃ identisch oder unterschiedlich sind und unabhängig voneinander ausgewählt sind aus der Gruppe, bestehend aus einem Wasserstoffatom; einem Halogenatom; einer Gruppe -OH; einer Gruppe -NH₂; einer Gruppe -SH und einer linearen oder verzweigten, gesättigten C₁-C₃₀-Alkylkette, die gegebenenfalls Heteroatome und/oder Arylgruppierungen und/oder Amingruppierungen und/oder Estergruppierungen und/oder Oxyamingruppierungen und/oder Oximgruppierungen und/oder Amidgruppierungen umfasst und/oder gegebenenfalls mit Halogenatomen substituiert ist und
2) einem Cycloalkin oder einem Heterocycloalkin mit 8 bis 12 Kettengliedern, die gegebenenfalls mit einer R₁-Gruppierung, wie sie oben definiert ist, substituiert sind,
E1 eine lineare oder verzweigte, gesättigte oder ungesättigte C₁-C₃₀-Alkylkette ist, die gegebenenfalls Heteroatome und/oder Arylgruppierungen und/oder Amingruppierungen und/oder Estergruppierungen und/oder Oxyamingruppierungen und/oder Oximgruppierungen und/oder Amidgruppierungen umfasst und/oder gegebenenfalls mit Halogenatomen substituiert ist, E1 vorzugsweise eine lineare oder verzweigte, gesättigte C₁-C₅-Alkylkette ist, die wenigstens ein Heteroatom umfassen kann;
- n1 = 0 oder 1 und
- mit einer reaktiven Gruppe F2 eines Moleküls von Interesse der folgenden Formel II:
F2-(E2)ₙ₂-X Formel II
in der:
- F2 eine reaktive Gruppe ist, die geeignet ist, mit der reaktiven Gruppe F1 der Verbindung der Formel I zu reagieren, F1 und F2 vorzugsweise aus einer Carboxylgruppe, einer radikalischen Einheit, einer Hydroxylgruppe, einer Alkoholgruppe, einer Amingruppe, einer Estergruppe, einer Aldehydgruppe, einer Hydrazidgruppe, einer Ketongruppe, einer Epoxygruppe, einer Isocyanatgruppe, einer Maleimidgruppe, einer Thiolgruppe und einer Oxyamingruppe ausgewählt sind,
- E2 eine lineare oder verzweigte, gesättigte oder ungesättigte C₁-C₃₀-Alkylkette ist, die gegebenenfalls Heteroatome und/oder Arylgruppierungen und/oder Amingruppierungen und/oder Estergruppierungen und/oder Oxyamingruppierungen und/oder Oximgruppierungen und/oder Amidgruppierungen umfasst und/oder gegebenenfalls mit Halogenatomen substituiert ist,
- n2 = 0 oder 1 und
- X eine Gruppierung mit Eigenschaften von Interesse ist,
b) Reaktion der Dreifachbindung der Verbindung der Formel I mit dem Halbleitermaterial, wobei das Halbleitermaterial vorzugsweise aus Silicium, Germanium und deren Legierungen und Gemischen ausgewählt ist.

11. Verfahren gemäß Anspruch 10, **dadurch gekennzeichnet, dass** die Stufe b) vor der Stufe a) durchgeführt wird.

12. Verfahren gemäß Anspruch 11, **dadurch gekennzeichnet, dass** es darüber hinaus umfasst:
- eine Stufe a1) des Schützens der reaktiven Gruppe F1 vor Durchführung der Stufe a) und
- eine Stufe b1) der Entschützung der reaktiven Gruppe F1 vor Durchführung der Stufe b).

13. Verfahren gemäß Anspruch 10, **dadurch gekennzeich- net,** dass die Stufe a) vor der Stufe b) durchgeführt wird.

14. Verfahren gemäß einem der Ansprüche 10 bis 13, **dadurch gekennzeichnet, dass** in A R₁ und R₂ und R₃, wenn vorhanden, gleich oder unterschiedlich sind und unabhängig voneinander aus der Gruppe, bestehend aus einem Wasserstoffatom; einem Halogenatom und einer linearen oder verzweigten, gesättigten C₁-C₃₀-Alkylkette, die gegebenenfalls Heteroatome und/oder Arylgruppierungen und/oder Amingruppierungen umfasst und/oder gegebenenfalls mit Halogenatomen substituiert ist, ausgewählt sind.

15. Verfahren gemäß einem der Ansprüche 10 bis 14, **dadurch gekennzeichnet, dass** in A R₂ und R₃ H sind und R₁ eine lineare oder verzweigte C₁-C₅-Alkylkette ist, die wenigstens ein Heteroatom umfassen kann.

16. Verfahren gemäß einem der Ansprüche 10 bis 15, **dadurch gekennzeichnet , dass** in der Formel I:
- in A R₁ und R₂ und R₃, wenn vorhanden, H sind,
- n1 den Wert 0 hat,
- F1 ein Rest -COOH ist und
- F2 ein Rest -NH₂ ist.

17. Verfahren gemäß einem der Ansprüche 10 bis 16, **dadurch gekennzeichnet, dass** in der Formel I:
- in A R₁ und R₂ und R₃, wenn vorhanden, H sind,
- n1 = 1,
- E1 eine -C₆H₁₂-Kette ist,
- F1 ein Rest -COOH ist und
- F2 ein Rest -NH₂ ist.

18. Verfahren gemäß einem der Ansprüche 10 bis 15, **dadurch gekennzeichnet, dass** in der Formel I A ein nichtsubstituiertes Cyclooctin ist,
- n1 = 1,
- E1 eine -O-CH₂-Kette ist,
- F1 ein Rest -COOH ist und
- F2 ein Rest -NH₂ ist.

19. Verfahren gemäß einem der Ansprüche 10 bis 18, **dadurch gekennzeichnet, dass** in der Formel II E2 eine -(CH₂)₂-O-CH₂-Kette ist.

20. Verfahren gemäß einem der Ansprüche 10 bis 19, **dadurch gekennzeichnet , dass** in der Formel II I X aus der Gruppe, bestehend aus einem Porphyrinmolekül, einem Anthracenmolekül, einem Naphthalinmolekül, einem Fullerenmolekül, einem Polyoxometallatmolekül und einer Ferrocengruppierung, ausgewählt ist.

21. Verfahren gemäß einem der Ansprüche 10 bis 20, **dadurch gekennzeichnet, dass** in der Formel II X eine Ferrocengruppierung ist.

## Claims

1. Use of a compound having the following formula I:
A-(E1)ₙₗ-Fl Formula I
in which:
- A is chosen from:
1) an alkyne having the formula: 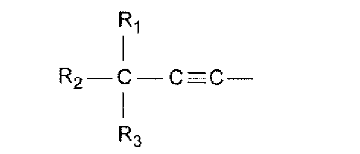 in which:
- R₁, R₂ and R₃ are identical or different and are independently of one another chosen in the group formed by a hydrogen atom; a halogen atom; an -OH group; an -NH₂ group; an -SH group and a C₁ to C₃₀ alkyl chain, linear or branched, saturated, optionally including heteroatoms and/or aryl groups and/or amine groups and/or ester groups and/or oxyamine groups and/or oxime groups and/or amide groups, and/or optionally substituted by halogen atoms; and
2) a 8 to 12 membered cycloalkyne or heterocycloalkyne, optionally substituted by a group R₁ as defined above,
- E1 is a C₁ to C₃₀ alkyl chain, linear or branched, saturated or unsaturated, optionally including heteroatoms and/or aryl groups and/or amine groups and/or ester groups and/or oxyamine groups and/or oxime groups and/or amide groups, an.d/or optionally substituted by halogen atoms, preferably E1 is a C₁ to C₅ alkyl chain, linear or branched, saturated, able to include at least one heteroatom,
- n1 = 0 or 1, and
- F1 is a reactive group able to react with a reactive group F2 of a molecule of interest having the following formula II:
F2-(E2)ₙ₂-X Formula II
in which:
- F2 is a reactive group able to react with the reactive group F1 of the compound having the formula I, preferably F1 and F2 are chosen from a carboxyl group, a radical entity, a hydroxyl group, an alcohol group, an amine group, an ester group, an aldehyde group, a hydrazide group, a ketone group, an epoxy group, an isocyanate group, a maleimide group, a thiol group, and an oxyamine group,
- E2 is a C₁ to C₃₀ alkyl chain, linear or branched, saturated or unsaturated, optionally including heteroatoms and/or aryl groups and/or amine groups and/or ester groups and/or oxyamine groups and/or oxime groups and/or amide groups, and/or optionally substituted by halogen atoms,
- n2 = 0 or 1, and
- X is a group having properties of interest,
for the functionalisation of the surface of a substrate made of a semiconductor material, preferably chosen from silicon, germanium and alloys and mixtures thereof, with molecules of interest.

2. Use according to claim 1 **characterised in that**, in A, R₁ and R₂ and R₃, when present, are identical or different and are independently of one another chosen in the group formed by a hydrogen atom; a halogen atom and a C₁ to C₃₀ alkyl chain, linear or branched, saturated, optionally including heteroatoms and/or aryl groups and/or amine groups, and/or optionally substituted by halogen atoms.

3. Use according to any one of the preceding claims **characterised in that**, in A, R₁ and R₂ and R₃, when present, are H and R₁ is C₁ to C₅ alkyl chain, linear or branched, optionally including at least one heteroatom.

4. Use according to any one of the preceding claims **characterised in that** in formula I, A is an unsubstituted cyclooctyne.

5. Use according to claim 1 **characterised in that** in formula I:
- in A, R₁ and R₂ and R₃, when present, are H,
- n1 has the value 0,
- F1 is a -COOH radical, and
- F2 is an -NH₂ radical.

6. Use according to claim 1 **characterised in that** in formula I:
- in A, R₁ and R₂ and R₃, when present, are H,
- n2 = 1,
- E1 is a -C₆H₁₂- chain,
- I1 is a -COOH radical, and
- F2 is an -NH₂ radical.

7. Use according to claim 1 **characterised in that** in formula I:
- A is an unsubstituted cyclooctyne,
- n1 = 1,
- E1 is an -O-CH₂- chain,
- Il is a -COOH radical, and
- F2 is an -NH₂ radical.

8. Use according to any one of the preceding claims **characterised in that** in formula II, E2 is a -(CH₂)₂-O-CH₂- chain.

9. Use according to any one of the preceding claims **characterised in that** in formula II, X is chosen in the group consisting of a porphyrine molecule, an anthracene molecule, a naphthalene molecule, a fullerene molecule, a polyoxometallate molecule and a ferrocene group, preferably X is a ferrocene group.

10. Method of functionalising the surface of a semiconductor material substrate **characterised in that** it includes the following steps:
a) reaction of the reactive group F1 of a compound having the following formula I:
A-(E1)ₙ-F1 Formula I
in which:
- A is chosen from:
1) an alkyne having the formula: 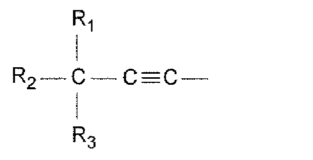 in which:
- R₁, R₂ and R₃ are identical or different and are independently of one another chosen in the group formed by a hydrogen atom; a halogen atom; an -OH group; an -NH₂ group; an -SH group and a C₁ to C₃₀ alkyl chain, linear or branched, saturated, optionally including heteroatoms and/or aryl groups and/or amine groups and/or ester groups and/or oxyamine groups and/or oxime groups and/or amide groups, and/or optionally substituted by halogen atoms; and
2) a 8 to 12 membered cycloalkyne or heterocycloalkyne, optionally substituted by a group R₁ as defined above,
- E1 is a C₁ to C₃₀ alkyl chain, linear or branched, saturated or unsaturated, optionally including heteroatoms and/or aryl groups and/or amine groups and/or ester groups and/or oxyamine groups and/or oxime groups and/or amide groups, and/or optionally substituted by halogen atoms, preferably E1 is a C₁ to C₅ alkyl chain, linear or branched, saturated, able to include at least one heteroatom,
- n1 = 0 or 1,
with a reactive group F2 of a molecule of interest having the following formula II:
F2-(E2)ₙ₂-X Formula II
in which:
- F2 is a reactive group able to react with the reactive group F1 of the compound having the formula I, preferably F1 and F2 are chosen from a carboxyl group, a radical entity, a hydroxyl group, an alcohol group, an amine group, an ester group, an aldehyde group, a hydrazide group, a ketone group, an epoxy group, an isocyanate group, a maleimide group, a thiol group, and an oxyamine group,
- E2 is a C₁ to C₃₀ alkyl chain, linear or branched, saturated or unsaturated, optionally including heteroatoms and/or aryl groups and/or amine groups and/or ester groups and/or oxyamine groups and/or oxime groups and/or amide groups, and/or optionally substituted by halogen atoms,
- n2 = 0 or 1, and
- X is a group having properties of interest,
b) reaction of the triple bond of the compound having the formula I with the semiconductor material, the semiconductor material preferably being chosen from silicon, germanium and their alloys and mixtures.

11. Method according to claim 10 **characterised in that** step b) is carried out before step a).

12. Method according to claim 11 **characterised in that** it further includes:
- before carried out step a), a step a1) of protection of the reactive group F1, and
- before carried out step b), a step b1) of deprotection of the reactive group F1.

13. Method according to claim 10 **characterised in that** step a) is carried out before step b).

14. Method according to any one of claims 10 to 13 **characterised in that**, in A, R₁ and R₂ and R₃, when present, are identical or different and are independently of one another chosen in the group formed by a hydrogen atom; a halogen atom and a C₁ to C₃₀ alkyl chain, linear or branched, saturated, optionally including heteroatoms and/or aryl groups and/or amine groups, and/or optionally substituted by halogen atoms.

15. Method according to any one of claims 10 to 14 **characterised in that**, in A, R₂ and R₃ are H and R₁ is a C₁ to C₅ alkyl chain, linear or branched, optionally including at least one heteroatom.

16. Method according to any one of claims 10 to 15 **characterised in that** in formula I:
- in A, R₁ and R₂ and R₃, when present, are H,
- n1 has the value 0,
- F1 is a -COOH radical, and
- F2 is an -NH₂ radical.

17. Method according to any one of claims 10 to 16 **characterised in that** in formula I:
- in A, R₁ and R₂ and R₃, when present, are H,
- n1 = 1,
- E1 is a -C₆H₁₂- chain,
- F1 is a -COOH radical, and
- F2 is an -NH₂ radical.

18. Method according to any one of claims 10 to 15 **characterised in that** in formula I, A is an unsubstituted cyclooctyne:,
- n1 = 1,
- E1 is an -O-CH₂- chain,
- F1 is a -COOH radical, and
- F2 is an -NH₂ radical.

19. Method according to any one of claims 10 to 18 **characterised in that** in formula II, E2 is a -(CH₂)₂-O-CH₂- chain.

20. Method according to any one claims 10 to 19 **characterised in that** in formula II, X is chosen in the group consisting of a porphyrine molecule, an anthracene molecule, a naphthalene molecule, a fullerene molecule, a polyoxometallate molecule and a ferrocene group.

21. Method according to any one of claims 10 to 20 **characterised in that** in formula II, X is a ferrocene group.
